# EUROPEAN PATENT SPECIFICATION

(11) **EP 2 555 931 B1**
(45) Date of publication and mention of the grant of the patent: **26.03.2014**
(21) Application number: 11711339.9
(22) Date of filing: 30.03.2011
(51) Int. Cl.: B60G 17/027, B60G 15/06

(54) **PIPE-LESS HYDRAULIC LIFTING DEVICE**
HYDRAULISCHES HEBEGERÄT OHNE VERBINDUNGSRÖHRE
DISPOSITIF DE LEVAGE HYDRAULIQUE SANS TUBES DE CONNECTION

(30) Priority: 08.04.2010 IT VA20100032
(43) Date of publication of application: 13.02.2013
(73) Proprietor: Metau Engineering S.r.l., 35017 Piombino Dese (IT)
(72) Inventor: ANTOGNAZZA, Piero, I-21043 Castiglione Olona (IT)
(74) Representative: Pellegri, Alberto
(86) International application number: PCT/EP2011/054917
(87) International publication number: WO 2011/124513

(56) References cited:
- EP-A2- 1 236 591
- DE-A1- 10 353 025
- DE-B4- 19 849 222
- DE-C1- 3 433 918

## Description

### TECHNICAL FIELD

The present disclosure relates in general to lifting devices of a machine, structure or vehicle body, for momentary needs, from a normal rest or suspension position to a higher elevation position, and in particular to lifting devices adapted to be associated to a suspension damper of the mass of the liftable load.

### BACKGROUND

Typically lifting devices are of three types: electromechanical, pneumatic or hydraulic, each type having typical characteristics that makes it adapted to respective categories of application.

An electromechanical system typically comprises transmissions, gears and endless screw devices in order to transform the rotation motion of an electrical motor in a linear motion and suffers from relatively large "start off" frictional forces. Low supply voltage applications (e.g. in vehicles) imply start up currents (cross sections of conductors of electrical cables) proportionately large. Moreover, the mechanical components must have good wear resistance and require high precision machining; aspects that make the device relatively expensive.

Pneumatic lifting devices, typically driven by a source of compressed air and controlled by electrovalves, operate at relatively low pressure thus requiring relatively large dimensions of the actuators, hardly compatible with the requirement of reducing encumbrances.

Hydraulic lifting devices use one or several cylinders eventually driven in parallel with a work fluid that is pressurized by a pump, commonly by a volumetric pump, associated to a reservoir of hydraulic fluid, for example a mineral oil. Control of the actuating cylinder or cylinders is implemented through electrovalves normally installed together with the control unit, from which depart pipes of connection to the respective actuating cylinders. These devices, though offering robustness, compactness of the actuators cylinders and reasonable costs, generally imply a complex hydraulic circuit layout that require qualified personal for assembling it, characteristic that lead to a marked criticalness of the accuracy of the installation which ends up to practically increasing overall cost.

Prior documents EP-A-1236591; DE-A-19849222; and DE-A-10353025, provide an overview of hydraulic lifting devices for extractor to be temporarily lifted from a normal rest position to higher position, employing a single effect actuator cylinder and a mono directional polymeric pump located in a confined space or an external high directional volumetric pump.

There are innumerable applications wherein the numerosity of lifting devices that are required, the need of reducing encumbrance of the devices and of substantially overcoming the laboriousness of assembling and commissioning of the installed lifting device, favor the choice of a more costly electromechanical device notwithstanding its drawbacks and criticalness of optimizing electrical and mechanical parameters and of managing of the large start-off electrical power requirement.

For example, a temporary lifting of the body of a vehicle suspended on common dampers for varying its elevation from the pavement, for example for permitting to run over curbs, pot-holes or abrupt changes of slope or for improving performances and similar needs, requires that the lifting device may be associated to the suspension damper to form an integrated device as compact as possible and which would require connections, for actuating the lifting of the suspended body of the vehicle from the pavement, of maximum simplicity and reliability, in consideration of the harsh solicitations these connections must withstand during travel of a land vehicle.

### SUMMARY

Vis-a-vis the known options that under different respects are far from being completely satisfactory for the reasons mentioned above, and specially for applications subject to strong solicitations that require an enhanced level of reliability and simplicity of installation and reduced encumbrance, the applicant has found and developed a solution of surprising effectiveness that offers significant advantages in terms of costs, simplicity of connection to command devices of the lifter, reduced encumbrance and an exceptional adaptability to be integrated in a common suspension damper.

Basically, the device of the present disclosure has an annular body in form of a robust ferrule, an inner-threaded end of which screws over an outer-threaded salient end of a tubular core, in order to define a cylindrical gap space between the annular body and an outer cylindrical wall of the tubular core. The cylindrical gap space thus defmed constitutes the chamber of a single-effect actuating cylinder, closed toward said salient end threaded joint by a sealing gasket, and by a cylindrical sleeve piston, telescopically sliding in the cylindrical gap space, between counter opposing ring seals held in annular grooves of the outer cylindrical surface of the tubular core and of the inner cylindrical surface of the annular body.

Within the annular body, is defined a hydraulic circuit that comprises:
a) a variable volume reservoir containing a volume of hydraulic work fluid adapted for the variations of volume of said cylindrical gap chamber of actuating cylinder closed by the sleeve piston, and a compensation air chamber separated by a mobile wall;
b) a bidirectional volumetric electropump for said hydraulic work fluid having a stator windings through which a drive current is passed;
c) a one way electrovalve having a coil electrically connected in series to the stator windings of the electropump;
d) a pressure relief safety valve of over pressurized hydraulic work fluid from the chamber of the actuating cylinder back to the variable volume reservoir; and
e) a position sensor of the sleeve piston in said cylindrical gap chamber of actuating cylinder.

An electrical control circuit powers the motor of the volumetric electropump embedded in the lifting device in function of a lift command or of return of the lifted structure to the original position and of a signal representative of the position of the sleeve piston produced by the embedded sensor that monitors the displacement of the load actuated by the lifting device.

Whether the control circuit be installed in a remoted position or within the annular body or near the lifting device, the connections that are required are exclusively electrical realized with common isolated cable. In practice, a two or three conductors power cable and eventually a two or three conductor isolated cable for transmission in one case of the signal produced by the position sensor or of the command signal in the other case, is all what is needed.

According to an embodiment practically suited for integrating the lifting device of this disclosure in a common suspension damper of a road vehicle, the tubular core has inner cylindrical surfaces the profile of which is defmed by one or more bore diameters adapted to slip over a generic rest leg or specifically around the stem of a common car suspension damper which often is relatively long in order to allow for an ample excursion of the suspended car body in case of impact against curbs or pot holes and therefore perfectly suited to integrate the lifting device of the present disclosure.

In this case, the cylindrical sleeve piston may terminate with a thrust ring telescopically sliding over the stem of the damper for modifying the separation distance between the two anchoring terminals (effective lengths) of the suspension damper without altering its dynamic response to solicitations.

The different structure of features and the operations of the hydraulic lifting device of the present disclosure, the decisive advantages and particularly effective embodiments will be more easily described in detail by referring to several exemplary embodiments illustrated in the attached drawings purely for illustrative purposes.

The invention is defined in the annexed claims, the content of which is to be considered part of this description.

### BRIEF DESCRIPTION OF THE DRAWINGS

**Fig. 1** shows a lifting device of the present disclosure integrated in the common suspension damper, by way of orthogonal side views and cross sectional views, in rest position and in lifted position of the load sustained by the suspensions.
**Fig. 2** shows a basic functional scheme of the lifting device of the present disclosure during a phase of shifting the load in opposition to a resisting force (typically the weight of the lifted body).
**Fig. 3** shows the basic functional scheme during a phase of maintaining a lifted position.
**Fig. 4** shows the basic functional scheme during a phase of shifting the load in concourse with its weight force.
**Figs. 5** **and** **6** show the basic functional scheme during phases of possible intervention of the safety valve of release of excessive pressure of the working fluid of the hydraulic lifting device.
**Fig. 7** shows orthogonal views of a hydraulic lifting device according to an exemplary embodiment wherein significant cross section planes are identified.
**Figs. from 8 to 14** are cross sectional views on the significant cross sectional planes of the views of Fig. 7.

### DETAILED DESCRIPTION OF EXEMPLARY EMBODIMENTS

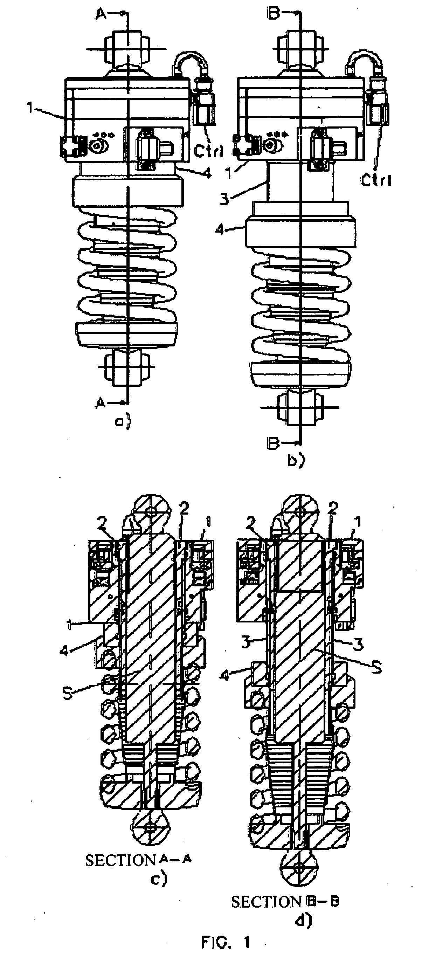

**FIG. 1** provides an immediate perception of the extraordinary compactness of the hydraulic lifting device of the present disclosure that is functionally connectable exclusively by a simple multi conductor cable, being the whole hydraulic circuit and all the functional components of power supply and control, integrated in the device, according to the illustrated embodiment.

Purely by way of exemplification of an important application of the device of this disclosure, in the outer views and in the cross section views of this figure, the hydraulic lifting device **1-4.,** is shown in association to a common suspension damper of a load, for example, the body of a road vehicle to be raised to a height from the pavement greater than the normal height of suspension when needed. In the two side views **a)** and **b),** as well as in the corresponding cross sectional views **c)** and **d),** the integrated assembly: namely the damper plus the hydraulic lifting device of this disclosure, is shown respectively in normal operation position and in a raised position.

In the cross sectional views **c)** and **d)** of the illustrated embodiment, it may be observed how the tubular core **2** of the lifting device may be simply screwed onto the stem **S** of the damper, which often is sufficiently long in road vehicles in order to avoid end-of-travel hits when driving over bumps, curbs or pot holes in the road surface, or purposely made as long as necessary for integrating the lifting device of this disclosure by modifying the distance of suspension from the pavement of the body carried on the suspension damper.

The sleeve piston **3** of the hydraulic lifting device terminates with a trust ring 4, which, upon commanding the lifting, extends the effective lengths of the damped suspension stem thus lifting the suspended body.

The so equipped suspension dampers allow lifting temporarily according to need the car body sustained on the dampers in order to vary its distance from the road pavement, for example for facilitating the run over obstacles, improve safety and performance intervalling over particularly ragged trains, etc.

Hydraulic lifting devices according to the present disclosure may be associated to all the four suspension dampers of a vehicle or only to the front dampers in order to modify the front suspension distance from the road pavement of the car, for example to avoid problems in travelling onto steep ramps or similar abrupt changes of slope.

Of course, the usefulness of the hydraulic raising device of the present disclosure is not limited to the automotive sector, being perfectly adapted to meet requirements of temporary raising any structure bearing on dampers or on rest legs, over which as many hydraulic lifting devices can be installed.

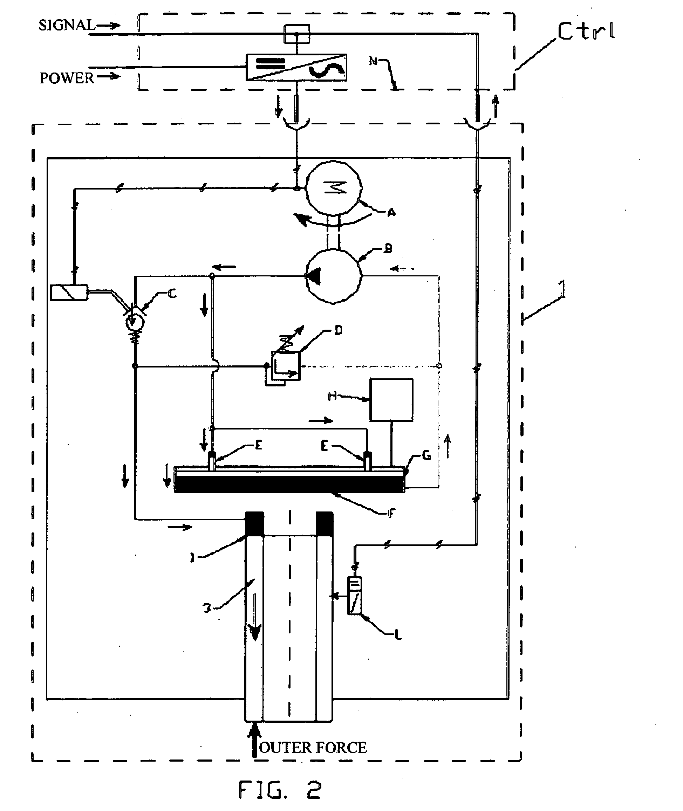

**FIG. 2** is a basic scheme of the hydraulic lifting device that shows the integration within the annular body **1** of the whole hydraulic circuit and of all its components as well as of a sensor of the relative position between piston and cylinder (mobile and fixed part) of a hydraulic actuating device. The scheme further shows how the connection to external parts is essentially of electrical type and precisely for powering the electric motor **A** of the bidirectional volumetric pump **B** and possibly for conveying the electrical signal produced by the position sensor **L.**

The scheme of **FIG. 2****,** shows the operation during the phase of shifting of the load in a direction opposite to a contrasting force, typically the weight force of the load to lift.

The control system, which in the exemplary embodiment is indicated with **N,** is contained in an appendix **Ctrl,** external to the annular body **1,** though it may be installed, if desirable, at any location, even remote from the hydraulic actuating device. The control system normally receive a command (signal) that activates a power supply circuit that in the exemplary embodiment for a road vehicle, may even be a common inverter adapted to transform the DC voltage of the battery of the vehicle in a AC voltage suitable to power the stator windings of the electrical motor **A,** in a sequence adapted to make it rotate in the desired direction, in order for the pump **B** to drive work fluid from the variable volume reservoir **F** into the actuating cylinder I, through a control check valve **C,** the coil of which may be simply connected electrically in series to the stator windings of the motor and thus be open anyway in case of a lift command. In such a phase, the electrical opening of the check valve would be superfluous because of the flow direction through the check valve itself, though the possibility of connecting the coil of the control valve in series to the motor winding simplifies electrical connections within the annular body **1.**

The compensation air chamber **H** has the function of compensating the variation of volume of the sealed chamber of the hydraulic fluid that has as mobile wall the wall **G** of the variable volume reservoir **F.** In this way, the cylindrical sleeve piston **3** of the actuating cylinder **I** is thrust out of the base of the annular body **1,** thus lifting the suspended load. In this phase, the power required for extending out the cylindrical sleeve is provided by the electrical power source, while the control system **N** controls the speed of the motor in function of the position signal produced by the sensor **L,** thus controlling the speed at which the load is raised.

During this phase of operation, part of the fluid pumped by the volumetric pump **B** is sent also to small pistons E that shift the mobile diaphragm wall **G** of the reservoir **F** to vary its volume automatically reducing the volume of a quantity corresponding to the volume of fluid pumped into the actuating cylinder **I**. The position transducer **L,** for example a variable inductance transducer, measures the shift providing a signal to the control system **N** that manages the speed and the stop of the electrical motor upon reaching the desired position.

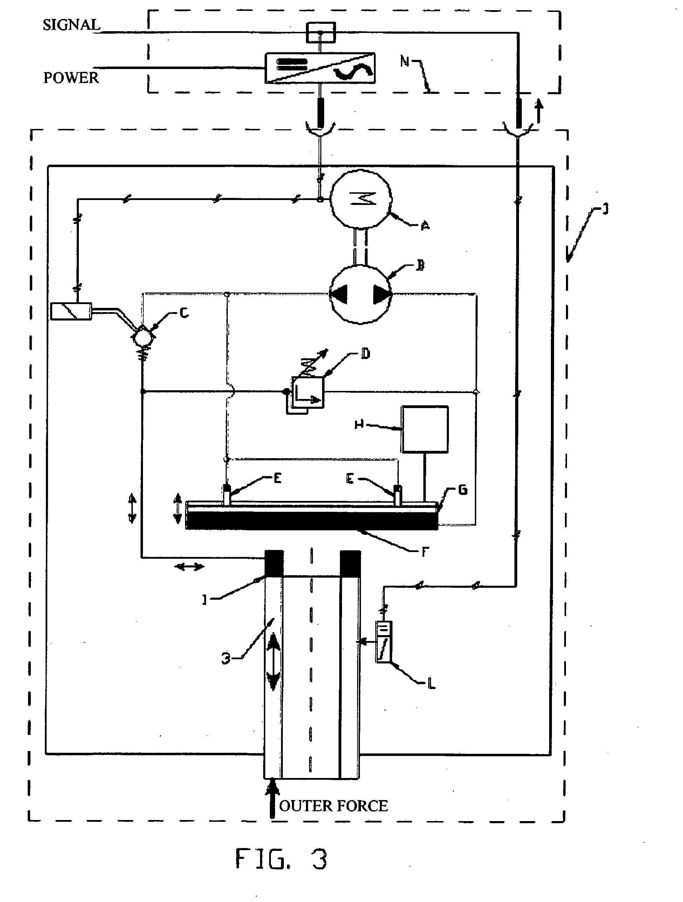

**FIG. 3** replicates the scheme at the conditions of the phase of maintaining the load in the reached position (assuming to be the raised position). In this phase, the position reached by the sleeve piston **3** of the actuating cylinder **I** is maintained by virtue of the seal provided by the check valve **C,** which having ceased the excitation current of the motor **A,** remains closed. In any case, the control system **N** monitors the maintenance of the position through the signal provided by the position transducer **L** and eventually intervenes for reestablishing the correct position should it depart from the desired position reached at the end of the preceding phase. The pump **B** may be momentarily started in one or in the other direction by the control system on order to maintain the desired position (as symbolically indicated by the arrows).

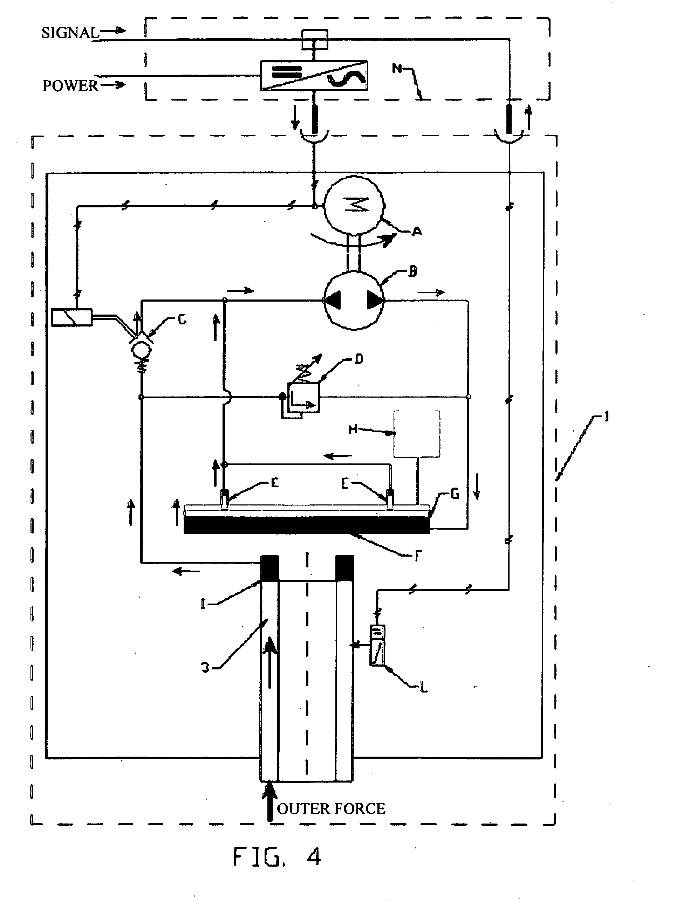

**FIG. 4** shows the functional scheme during the phase of shifting of the load in a direction coincident with the direction of the force opposing the lifting (typically the weight force of the load), typically for returning the temporarily lifted body to its normal rest position.

The control system **N** activates the motor **A** making it rotate in the direction such that the volumetric pump **B** sucks hydraulic fluid from the actuating cylinder **I** sending it into the variable volume reservoir **F** through the control check valve **C** which in this phase is maintained open by the current circulating through the stator windings of the motor. The compensation air chamber **H** compensates the air volume variation of the sealed chamber that has as a wall the mobile diaphragm wall **G** of the variable volume reservoir **F.**

In this way, the sleeve piston **3** of the actuating cylinder **I** returns inside the annular body **1.** In this phase, the necessary power is provided by the weight force of the load, while the control system **N** controls the speed of the motor in order to control the speed of descent of the load. In this phase, the fluid sent to the variable volume reservoir **F** shifts the mobile wall G of the reservoir **F** such that its volume adapts itself automatically, increasing by a quantity equivalent to the volume of fluid returning from the actuating cylinder **I**.

Also in this phase, the position transducer **L** monitors the piston shift providing a position signal to the control system **N** that besides the speed of return to the normal suspended position of the load also manages the stop of the electrical motor upon reaching the normal rest position or any other intermediate position if so commanded.

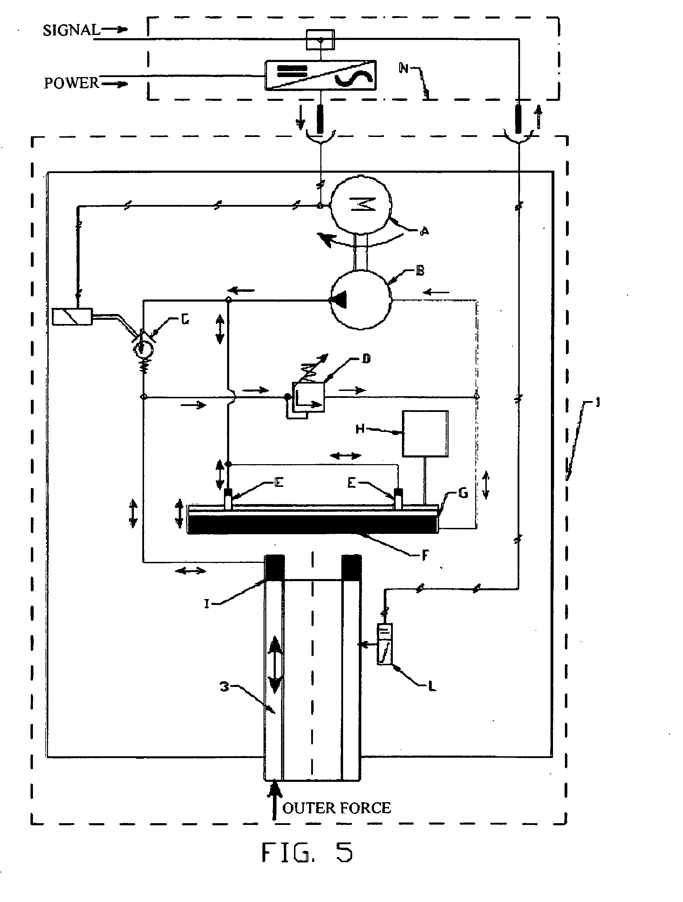

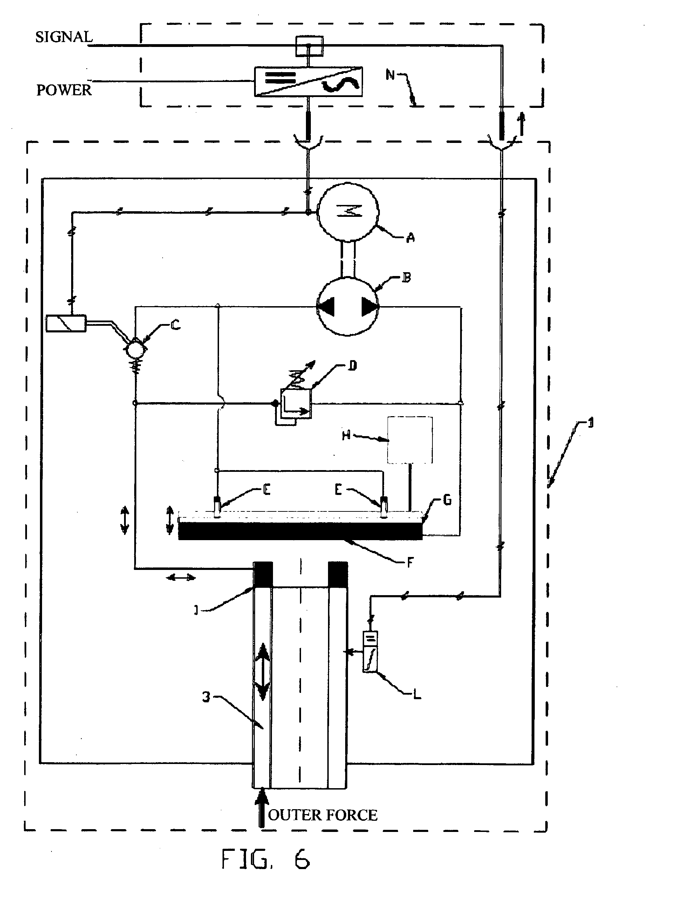

**FIGs. 5** and **6** show the scheme of operation at conditions of possible intervention of the safety valve **D** for limiting the pressure within the actuating cylinder I to design values of correct functioning while avoiding causing seepages of hydraulic fluid and possible breakages in case of malfunctioning or overloading, by providing a pressure relieving bypass path of the fluid pumped in the actuating cylinder **I** back to the variable volume reservoir **F.**

The overpressure limiting valve **D** may intervene in case of impact of the wheels of a vehicle against a curb or rim of a deep hole in the pavement at an excessively high speed such to cause an intense solicitation of the suspensions incorporating the lifting device of the car body or for other reasons of malfunctioning that could occur.

The two elevation views show the sleeve piston **3** terminating with the thrust ring **4,** respectively in a completely retracted position and in a completely extended position, telescopically sliding over the cylindrical core 2 of the device, having at the end a common Seeger ring stop.

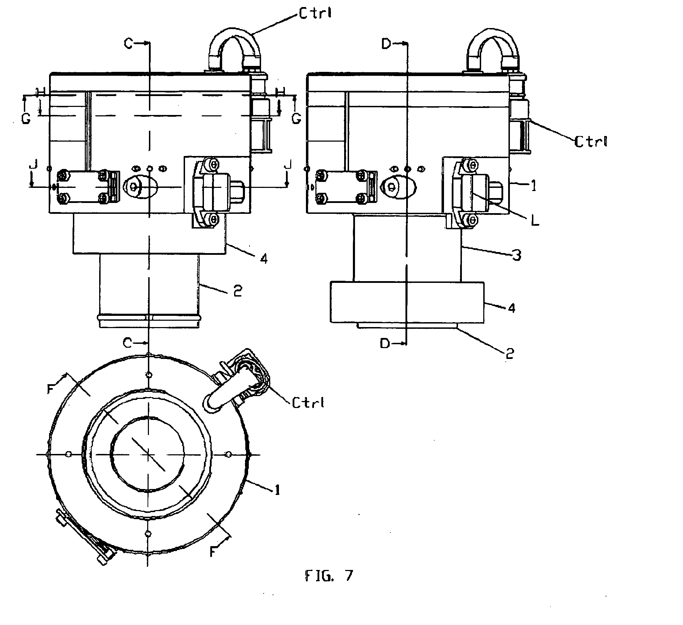

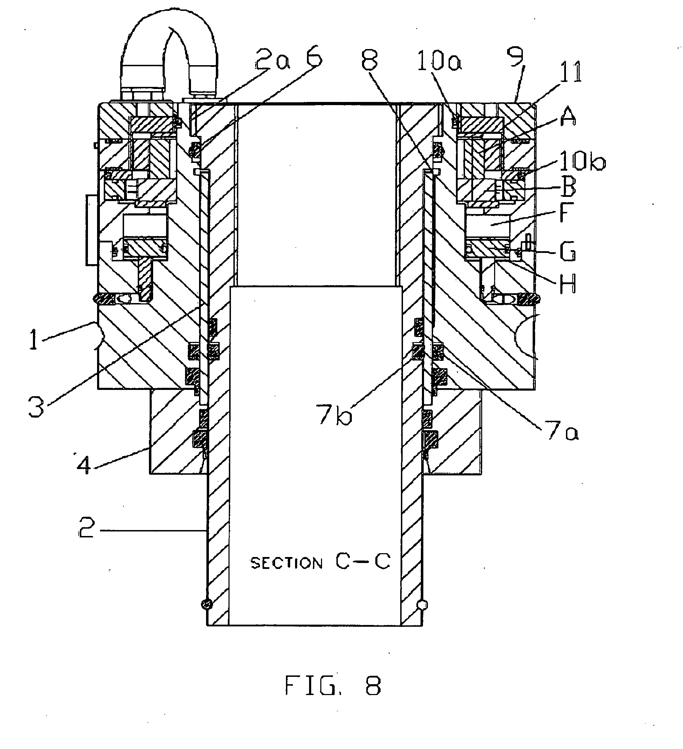

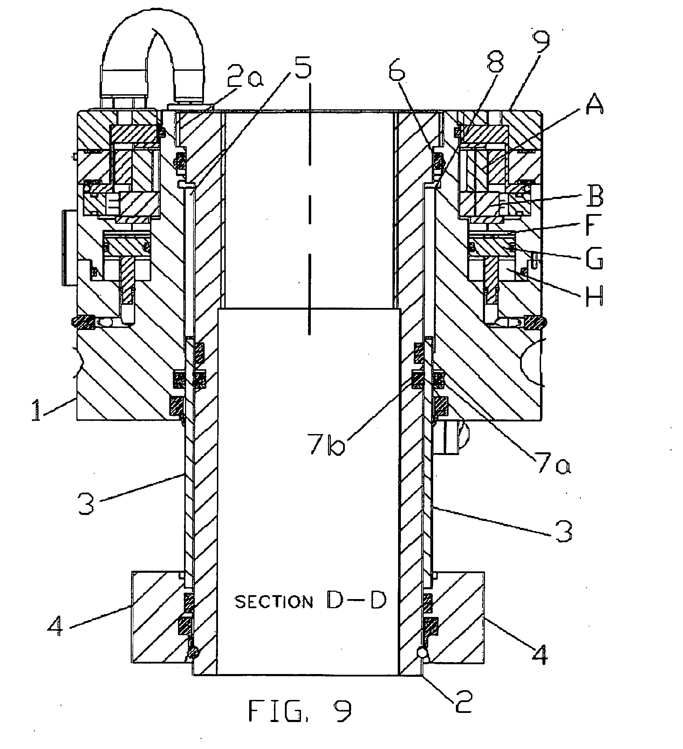

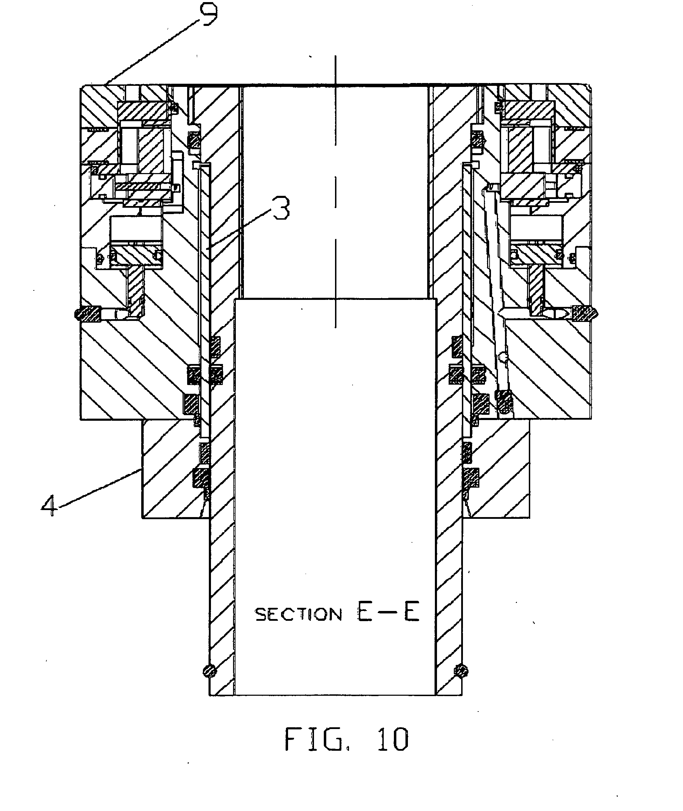

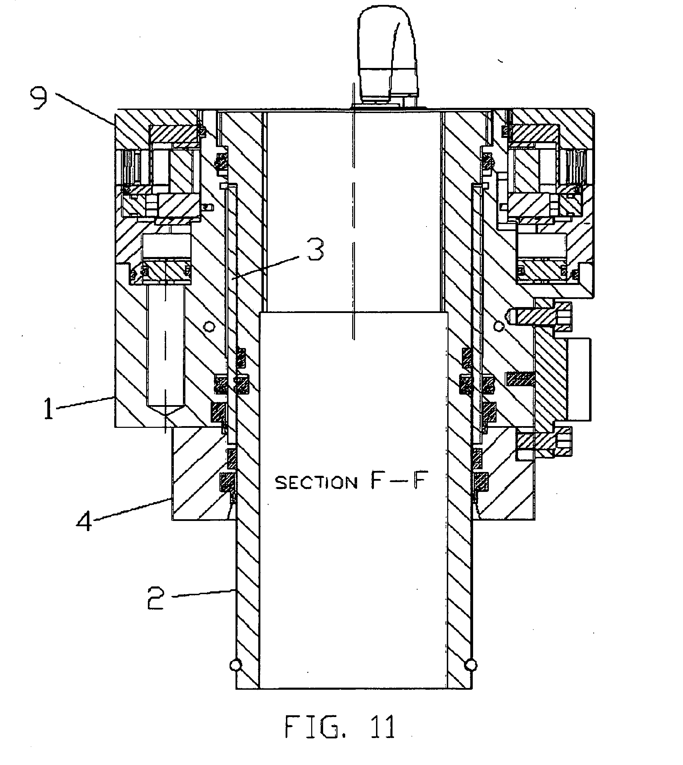

**FIGs. 8** to **14** are layout and side view cross sections in the significant section planes identified in the view of **FIG. 7****,** which make clearly observable the hydraulic connections and the structures of all the functional elements of the hydraulic circuits, identified in the figures by the respective letters: **A, B, C, D, E, F, G, H** and **I,** as already described with reference to the schemes of **FIGs. 2** to **6****,** and of the electromagnetic position transducer **L.** The side view cross sections of **FIGs 8** to **11****,** show the manner in which, in the depicted example, the annular body **1** connects to one end of the cylindrical core **2** like a robust ferrule, screwing on the outer thread **2a** of a salient end portion of the outer profile of the cylindrical core **2,** thus defining the cylindrical chamber **5** (FIG. 9) that is sealed at one end by the O-ring **6,** and closed by the cylindrical sleeve piston **3,** telescopically sliding over outer cylindrical surface of the core **2,** between opposite scraper rings 7a and 7b, dynamic seals. The hydraulic connection to the chamber **5** of the actuating cylinder is made through ducts **8,** defined through the bulk and at the outer coupling surface of the body **1.**

The motor **A** and the volumetric pump **B** are constituted in an annular space defined within the body **1** resembling a robust ferrule surrounding one end of the tubular core **2,** closed by an annular cap **9.**

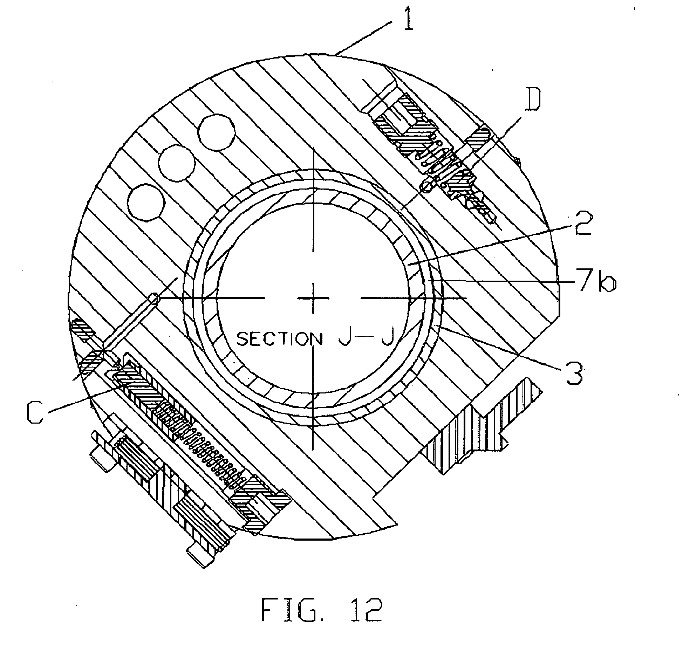

The layout cross section of **FIG. 12** allows observing the electrovalve **C** and the safety valve **D,** installed in the respective cavities of body **1.**

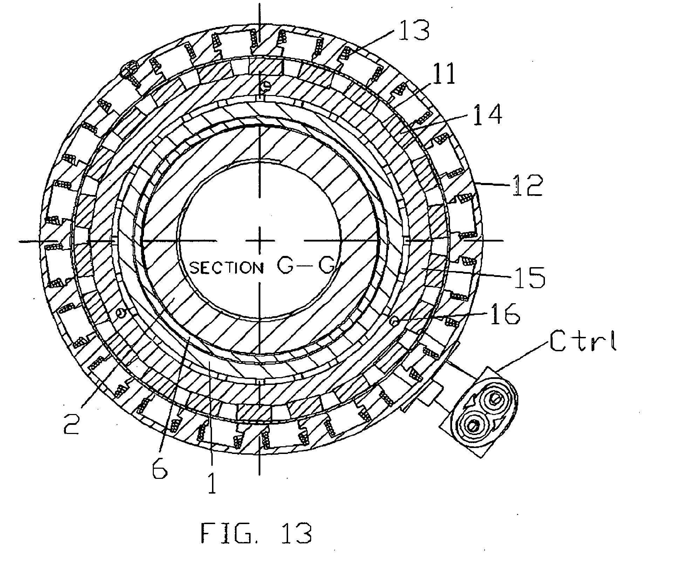

**FIG. 13** is a cross sectional layout view (section plane G-G of FIG. 7) wherein is observable the structure of the permanent magnet motor **A** of the pump **B.**

The stator **12** is solidly connected to the underlying annular body 1 (FIG. 8) and carries the magnetic expansions with the respective stator windings **13.**

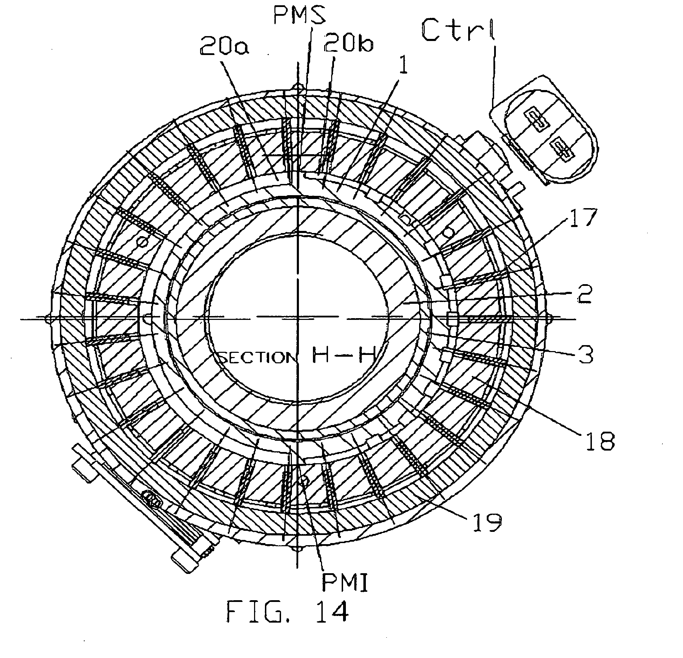

The rotor **15,** solidly connected to the underlying block carrying the small pistons **18** (shown in the successive FIG. 14) of the pump **B,** by keys **16.** On the rotor **15** are glued the permanent magnets **14.**

A modulated current driven through the stator windings **13** creates a torque on the rotor that is transmitted to the block **18** carrying the small pistons **17** (shown in the successive FIG. 14) of the pump **B,** the direction of which depends from the direction of flow of the current of excitation in the stator windings **13.**

A separation bell **11,** installed in the gap space of magnetic coupling of the motor, through static O-rings gaskets **10a** and **10-b** (FIG. 8) seals the rotor region, completely filled of fluid, from the external environment, thus avoiding the use of a dynamic seal gasket, known to be likely to wear and fail.

**FIG. 14** is a cross sectional view in the section plane H-H of the volumetric pump **B.**

In the block **18,** rotating around a recessed portion of the annular body **1,** there are radially oriented holes into which move pumping pistons **17,** which, or more precisely the ends of their stems, are held in contact with the inner cylindrical surface of an outer roll bearing **19** (for example a ball bearing) by the pressure of the work fluid in the hydraulic circuit of the pumping pistons **17** and by the centrifugal force.

The bearing **19** is installed with a certain eccentricity in respect to the rotational axis of the block **18** carrying the small pistons **17** and, as a consequence, during revolution of the block **18** carrying the small pistons, dragged by the overlying rotor **15** (FIG. 13), the pistons **17** held in sliding contact with the inner track ring of the eccentrically installed outer bearing, have a reciprocating motion from a fully inserted position (PMI) to a fully extracted position (PMS).

Therefore, during transitions from PMI to PMS, the pistons **17** "suck in" fluid and during transitions from PMS to PMI, the pistons **17** "compress" the fluid sucked in during the preceding phase.

Semi-circular recesses **20a** and **20b,** separated by diametrically opposed sealing ridges, respectively at the dead points PMI and PMS, are defined by machining the in the annular body **1,** constitute intake and delivery ports of the hydraulic fluid, traveled over by the pistons **17** during revolution of the block **18,** and physically separate the two phases of operation of the pump: namely when the pistons suck fluid from the intake recess **20a,** and when the pistons compress the fluid in the delivery recess **20b,** which are in communication with the respective branches of the hydraulic circuit, upstream and downstream of the pump **B,** respectively.

Naturally, the construction materials may be chosen during the design phase of the lifting device of the present disclosure taking into account the intended use of the device, the contemplated loads, temperature range of operation, supply voltage as well as of encumbrance and eventual special requirements of light weight, etc.

In the following table are indicated usable materials adapted for automotive applications of the novel lifting device, though special requirements may lead the designer to different choices.

| REF. | DESCRIPTION | MATERIALS |
|---|---|---|
| A | **Motor** | |
| 21 | stator | Fe-Si laminae |
| 22 | stator windings | enameled Cu wire |
| 25 | rotor | malleable iron |
| 24 | permanent magnets | Ferrite, Neodymium, Samarium, Cobalt |
| B | **Volumetric pump** | |
| 18 | rotor carrying the small pistons | bronze |
| 17 | small pistons | chromium steel |
| C | **Control check valve** | |
| | body of check valve | malleable iron |
| | seal | reinforced polyamide |
| D | **Safety valve** | alloy steel |
| E | **Pistons shifting the mobile wall of the reservoir** | chromium steel |

| | **Structural components** | |
|---|---|---|
| 1 | annular body | Al-Cu alloy (series 2000) or Al-Zn alloy (series 7000) |
| 2 | tubular core | |
| 3 | sleeve piston | |
| 4 | thrust ring | |
| 9 | annular cap | |
| G | mobile wall of variable volume reservoir | |
| I | actuating cylinder | chromium coated carbon steel |
| 11 | separation bell | reinforced polyamide resin or polyacetalic resin |

| | **Sealing elements** | |
|---|---|---|
| 6 | O-ring static gaskets | acryl nitril butadiene (nitrilic-NBR rubber) or fluorocarbide rubber (Viton-FKM) |
| 7 | dynamic seal rings | |
| | scraper rings of pistons | |
| | anti seepage packings | PTFE (polyetrafluoroethylene) |
| | slide guides | PTFE resin mix with antifrictional materials (e.g. bronze, etc.), commercial product: TURCITE |

## Claims

1. Hydraulic lifting device for a structure to be temporarily lifted from a normal rest position to a higher position, comprising an annular body (1), an inner threaded end of which screws over a salient outer threaded collar portion (2a) of a tubular core (2), defming a cylindrical gap space (5) between the annular body (1) and an outer cylindrical wall of said tubular core (2) constituting the chamber of a single effect actuating cylinder (I), closed towards said salient end part (2a) by a gasket (6) and by a sleeve piston (3) telescopically moving over the outer surface of said cylindrical wall of the tubular core (2), said annular body (1) containing a hydraulic circuit comprising
a) a variable volume reservoir (F) containing a volume of hydraulic work fluid adequate to the variation of volume of said actuating cylinder chamber (5) closed by said sleeve-piston (3) and a compensation air chamber (H) separated by a mobile wall (G);
b) a bidirectional volumetric electropump (A, B) of said hydraulic work fluid, having stator windings in which flows a drive current of the electropump;
c) a control check valve (C) having a coil electrically in series to the stator windings of the electropump;
d) a safety valve (D) in a pressure relief conduit of the hydraulic fluid from the chamber (5) of said actuating cylinder (I) back to said reservoir (F);
e) a position sensor (L) of said sleeve-piston (3) inside said chamber (5) of the actuating cylinder;
and an electrical power supply and control circuit (N) of the motor (A) of the volumetric electropump in function of a lift command or of a return command of the lifted structure toward the normal rest position and of a signal representative of the position of the sleeve piston (3) produced by said sensor.

2. The hydraulic lifting device according to claim 1, wherein said volumetric electropump (A, B) comprises a stator (12) connected to said annular body (1), defming magnetic pole shoes with stator windings (13);
a permanent magnet rotor (15) made fast by keys (16) to a revolving block (18) carrying radially reciprocating pistons (17), rotating around a portion of said annular body (1) and on the surface of which diametrically opposite longitudinal relief seals in sliding contact against the inner surface of the rotating block (18) define respective transition dead points (PMI, PMS) of the reciprocating pistons (17), separating a semicircular intake recess (20a) from a contiguous delivery recess (20b) of the hydraulic circuit, a stem end of said radially pumping pistons (17) being held, by the pressure difference of the hydraulic fluid present in said two recesses and by the centrifugal force, in sliding contact against the surface of an inner track ring of a roll bearing (19) eccentrically installed around said revolving block (18).

3. The hydraulic lifting device according to claim 2, wherein a separation bell (11) inserted in a gap space between said stator (12) and said rotor (15) and static O-ring gaskets (10a, 10b) seal off the space occupied by said rotor and said revolving block (18) carrying the radially reciprocating pistons (17) of said electropump (A, B).

4. The hydraulic lifting device according to claim 1, wherein said sleeve piston (3) telescopically moving over the outer surface of said cylindrical wall of the tubular core (2) runs between opposite scraper rings (7a, 7b) retained in counter-opposed annular grooves in the outer cylindrical surface of the tubular core (2) and in the inner cylindrical surface of the annular body (1), respectively.

5. The hydraulic lifting device according to claim 1, wherein said tubular core (2) has an inner thread in correspondence of said end with an outer threaded salient collar profile adapted to install the lifting device around a threaded portion of a rest leg or a threaded portion of the stem (S) of a suspension damper; and
said sleeve piston (3) terminates with a thrust ring (4).

## Patentansprüche

1. Hydraulisches Hebegerät für eine temporär von einer normalen Ruheposition auf eine höhere Position anzuhebende Struktur, umfassend einen ringförmigen Körper (1), von welchem sich ein inneres, mit Gewinde versehenes Ende über einen hervorstehenden, mit einem Außengewinde versehenen Kragenbereich (2a) eines röhrenförmigen Kerns (2) schraubt, der einen zylindrischen Spaltbereich (5) definiert zwischen dem ringförmigen Körper (1) und einer äußeren, zylindrischen Wand des besagten, röhrenförmigen Kerns (2) und damit die Kammer eines einfach wirkenden Zylinders (1), die zu dem besagten, hervorstehenden Endteil (2a) hin durch eine Dichtung (6) verschlossen ist sowie durch einen Hülsenkolben (3), welcher entlang der äußeren Oberfläche der besagten Zylinderwand des röhrenförmigen Kerns (2) teleskopisch bewegbar ist, wobei der besagte ringförmige Körper (1) einen Hydraulikkreis aufweist mit
a) einem Reservoir (F) variablen Inhalts, welches ein Volumen einer hydraulischen Arbeitsflüssigkeit enthält entsprechend der Volumenveränderung der besagten, durch den genannten Hülsenkolben (3) verschlossenen Kammer (5) des Betätigungszylinders und einer durch eine mobile Kammer abgetrennten Kompensationsluftkammer (H);
b) einer bidirektionalen, volumetrischen Elektropumpe (A, B) für das besagte hydraulische Arbeitsfluid, mit Statorwicklungen, worin ein Strom zum Antrieb der Elektropumpe fließt;
c) einem Kontroll-Rückschlagventil (C) mit einer Spule, die mit den Statorwicklungen der Elektropumpe in Reihe geschalten ist;
d) einem Sicherheitsventil (D) in einer Druckablassleitung für das Hydraulikfluid von der Kammer (5) des besagten Betätigungszylinders (1) zurück zu dem besagten Reservoir (F);
e) einem Positionssebsir (L) des besagten Hülsen-Kolbens (3) innerhalb der Kammer (5) des Betätigungszylinders;
und einem Schaltkreis (N) zur elektrischen Stromversorgung und zur Steuerung des Motors (A) der volumetrischen Elektropumpe als Funktion eines Hub-Befehls oder eines Rückkehr-Befehls an die angehobene Struktur zurück zur normalen Ruheposition, und eines von dem besagten Sensor erzeugten, die Position des Hülsen-Kolbens (3) repräsentierenden Signals.

2. Das hydraulisches Hebegerät gemäß Anspruch 1, wobei die besagte, volumetrische Elektropumpe (A, B) einen an den besagten ringförmigen Körper (1) angeschlossenen Stator (12) umfasst, welcher magnetische Polschuhe mit Statorwindungen (13) definiert;
einen mit Keilen (16) an einem radial oszillierende Kolben (17) tragenden Drehblock (18) festgemachten Permanentmagnetrotor (15), der um einen Bereich des besagten ringförmigen Körpers (1) rotiert und auf dessen Oberfläche diametral einander gegenüber liegende, längliche Entlastungsdichtungen in gleitendem Kontakt mit der inneren Oberfläche des Drehblocks (18) jeweilige Übergangs-Totpunkte (PMI, PMS) der oszillierenden Kolben (17) definieren, und eine halbkreisförmige Eingangs-Ausnehmung (20a) von einer kontinuierlichen Zuführausnehmung (20b) des hydraulischen Kreises trennen, wobei ein Holmende der besagten, radial pumpenden Kolben (17) durch die in den besagten zwei Ausnehmungen vorliegende Druckdifferenz der hydraulischen Flüssigkeit und durch die Fliehkraft in gleitendem Kontakt mit der Oberfläche eines inneren Führungsrings eines exzentrisch um den Drehblock (18) installierten Walzenlagers gehalten wird.

3. Das hydraulisches Hebegerät gemäß Anspruch 1, wobei eine Trennungs-Glocke (11) in einem Spaltraum zwischen dem besagten Stator (12) und dem besagten Rotor (15) und statische O-Ring-Dichtungen (10a, 10b) den von dem besagten Rotor und dem drehenden, die radial oszillierenden Kolben (17) der besagten Elektropumpe (A, B) tragenden Block (18) abdichten.

4. Das hydraulisches Hebegerät gemäß Anspruch 1, wobei der besagte, teleskopisch entlang der äußeren Oberfläche der besagten zylindrischen Wand des röhrenförmigen Kerns (2) bewegbare Hülsenkolben (3) zwischen entgegengesetzten Abstreifringen (7a, 7b) läuft, welche in gegenüber liegenden ringförmigen Nuten in der äußeren zylindrischen Oberfläche des röhrenförmigen Kerns (2) bzw. in der inneren, zylindrischen Oberfläche des ringförmigen Körpers (1) festgehalten sind.

5. Das hydraulisches Hebegerät gemäß Anspruch 1, wobei der besagte, röhrenförmige Kern (2) ein inneres Gewinde aufweist, womit ein mit einem Außengewinde versehenes, vorspringendes Kragenprofil korrespondiert, und das geeignet ist, das Hebegerät um einen mit Gewinde versehenen Bereich eines Ruhefußes oder eines Gewindebereichs eines Holms (S) eines Aufhängungsdämpfers zu installieren; und
wobei der besagte Hülsenkolben (3) mit einem Stützring () endet.

## Revendications

1. Dispositif de levage hydraulique pour une structure à soulever temporairement d'une position de repos normale à une position plus haute, comprenant un corps annulaire (1) dont une extrémité filetée interne se visse sur une partie de collier fileté externe saillante (2a) d'une âme tubulaire (2), définissant un entrefer cylindrique (5) entre le corps annulaire (1) et une paroi cylindrique externe de ladite âme tubulaire (2) constituant la chambre d'un vérin à simple effet (1), fermée vers ladite partie d'extrémité saillante (2a) par un joint (6) et par un piston à manchon (3) se déplaçant de manière télescopique sur la surface externe de ladite paroi cylindrique de l'âme tubulaire (2), ledit corps annulaire (1) contenant un circuit hydraulique comprenant:
a) un réservoir à volume variable (F) contenant un volume de fluide de travail hydraulique adéquat pour la variation de volume de ladite chambre de vérin (5) fermée par ledit piston à manchon (3) et une chambre à air de compensation (H) séparée par une paroi mobile (G);
b) une pompe électrique volumétrique bidirectionnelle (A, B) dudit fluide de travail hydraulique, ayant des enroulements de stator dans lesquels circule un courant d'entraînement de la pompe électrique;
c) une soupape anti-retour de régulation (C) ayant une bobine raccordée électriquement en série aux enroulements de stator de la pompe électrique;
d) une soupape de sécurité (D) dans une conduite de décharge de pression du fluide hydraulique provenant de la chambre (5) dudit vérin (1) et revenant vers ledit réservoir (F);
e) un capteur de position (L) dudit piston à manchon (3) à l'intérieur de ladite chambre (5) du vérin;
et un circuit de commande et d'alimentation d'énergie électrique (N) du moteur (A) de la pompe électrique volumétrique en fonction d'une commande de levage ou d'une commande de retour de la structure soulevée vers la position de repos normale et d'un signal représentatif de la position du piston à manchon (3) produit par ledit capteur.

2. Dispositif de levage hydraulique selon la revendication 1, dans lequel ladite pompe électrique volumétrique (A, B) comprend un stator (12) raccordé audit corps annulaire (1), définissant des pièces polaires avec les enroulements de stator (13);
un rotor à aimant permanent (15) rendu solidaire par des clavettes (16) d'un bloc rotatif (18) portant des pistons effectuant des mouvements de va-et-vient de manière radiale (17), tournant autour d'une partie dudit corps annulaire (1) et sur la surface duquel des joints en relief longitudinaux diamétralement opposés en contact coulissant contre la surface interne du bloc rotatif (18) définissent des points morts de transition (PMI, PMS) respectifs des pistons effectuant un mouvement de va-et-vient (17), séparent un évidement d'admission semi-circulaire (20a) d'un évidement de distribution contigu (20b) du circuit hydraulique, une extrémité de tige desdits pistons (17) qui pompent de manière radiale étant maintenue, par la différence de pression du fluide hydraulique présent dans lesdits deux évidements et par la force centrifuge, en contact coulissant contre la surface d'une bague de trajectoire interne d'un palier à rouleaux (19) excentriquement installé autour dudit bloc rotatif (18).

3. Dispositif de levage hydraulique selon la revendication 2, dans lequel une cloche de séparation (11) insérée dans un entrefer entre ledit stator (12) et ledit rotor (15) et des joints toriques statiques (10a, 10b) réalisent l'étanchéité de l'espace occupé par ledit rotor et ledit bloc rotatif (18) portant les pistons (17) effectuant un mouvement de va-et-vient radial de ladite pompe électrique (A, B).

4. Dispositif de levage hydraulique selon la revendication 1, dans lequel ledit piston à manchon (3) se déplaçant de manière télescopique sur la surface externe de ladite paroi cylindrique de l'âme tubulaire (2) s'étend entre des segments racleurs (7a, 7b) opposés retenus dans des rainures annulaires opposées dans la surface cylindrique externe de l'âme tubulaire (2) et dans la surface cylindrique interne du corps annulaire (1), respectivement.

5. Dispositif de levage hydraulique selon la revendication 1, dans lequel ladite âme tubulaire (2) a un filetage interne en correspondance de ladite extrémité avec un profil de collier saillant fileté externe adapté pour installer le dispositif de levage autour d'une partie filetée d'une patte au repos ou une partie filetée de la tige (S) d'un amortisseur de suspension; et
ledit piston à manchon (3) se termine par une bague de poussée (4).
